## Europäisches Patentamt
## European Patent Office
## Office européen des brevets

(19)

(11) Veröffentlichungsnummer: **0 208 793 B1**

# (12) EUROPÄISCHE PATENTSCHRIFT

(45) Veröffentlichungstag der Patentschrift: 27.03.91

(51) Int. Cl.⁵: **H04N 9/78**, H04N 11/18

(21) Anmeldenummer: 85107976.4

(22) Anmeldetag: 27.06.85

(54) **Farbträgerfalle für den Luminanzkanal von Farbfernsehempfängern.**

(43) Veröffentlichungstag der Anmeldung:
21.01.87 Patentblatt 87/04

(45) Bekanntmachung des Hinweises auf die
Patenterteilung:
27.03.91 Patentblatt 91/13

(84) Benannte Vertragsstaaten:
**DE FR GB IT NL**

(56) Entgegenhaltungen:
**EP-A- 0 135 599
FR-A- 2 504 766
US-A- 3 969 762**

(73) Patentinhaber: **Deutsche ITT Industries GmbH
Hans-Bunte-Strasse 19 Postfach 840
W-7800 Freiburg i.Br.(DE)**

(72) Erfinder: **Mehrgardt, Sönke, Dr.
Häglestrasse 26
W-7801 March(DE)**

**Beschreibung**

Die Erfindung betrifft eine Farbträgerfalle für den Luminanzkanal von Farbfernsehempfängern. Bekanntlich wird in üblichen Farbfernsehempfängern das Farb-Bild-Austast-Synchron-Signalgemisch (=FBAS-Signal) in einem Luminanzkanal und einem Chrominanzkanal verarbeitet, wobei im Luminanzkanal die weitgehend vollständige Unterdrückung des Farbträgers, der bekanntlich bei allen drei heute üblichen Farbfernsehsystemen (NTSC, PAL, SECAM) innerhalb des Frequenzbandes des Luminanzkanals liegt, mittels einer sogenannten Farbträgerfalle, d.h. einem entsprechend ausgebildeten Filter, vorgenommen, vgl. zu diesem allgemeinen Sachverhalt rein beispielsweise das Buch von O. Limann, "Fernsehtechnik ohne Ballast", 13. Auflage, München 1979, Seiten 203 bis 205.

Aus US-A-3 969 762 ist ein Secam-Farbfernsehempfänger bekannt, der im Luminanzkanal ein durchstimmbares Kerbfilter als Farbträgerfalle enthält, dessen Sperrfrequenz eine Funktion der momentanen Farbhilfsträgerfrequenz ist. Dieses schmalbandige mitgezogene Kerbfilter beeinflußt die Signale des Luminanzkanals weniger als eine Farbträgerfalle mit stationärer Frequenz jedoch mit breiterem Sperrbereich. Durch das schmalbandige Kerbfilter wird weder der Frequenzgang für die Helligkeitssignale beeinträchtigt, noch werden bildwichtige Signalanteile unterdrückt. Die Farbträgerfalle und die übrigen Teilschaltungen verarbeiten dabei analoge Signale - vgl. den Oberbegriff des Anspruchs 1.

Aus EP-A-135 599 ist ein monolithisch integriertes Digitalfilter für den Luminanzkanal von Farbfernsehempfängern bekannt. Die Filterschaltung besteht dabei im wesentlichen aus der Zusammenschaltung von Verzögerungsstufen und Addierern oder Subtrahierern, wobei jeweils eine Verzögerungsstufe und ein Addierer/Subtrahierer eine Untereinheit bilden. Mittels des Addierers/Subtrahierers wird dabei jeweils das verzögerte und das unverzögerte Digitalsignal zusammengefaßt und der nächsten Untereinheit zugeführt. Die jeweiligen Verzögerungszeiten der Verzögerungsstufen betragen in der Regel eine oder zwei Taktperioden. Der Takt ist dabei identisch mit dem Abtasttakt der Digitalisierung, die mit der vierfachen Farbhilfsträgerfrequenz der jeweiligen Farbfernsehnorm (PAL, NTSC, SECAM) erfolgt. Die Durchlaßkurvenschar weist bei der jeweiligen Farbhilfsträgerfrequenz, z.B. bei 4,3 MHz bei PAL, einen festen Dämpfungspol auf.

Die Aufgabe der in den Ansprüchen gekennzeichneten Erfindung besteht darin, für Farbfernsehempfänger mit digitaler Signalverarbeitung die Schaltung einer digitalen Farbträgerfalle anzugeben, die insbesondere an die speziellen Gegebenheiten der einzelnen Normen besser angepaßt werden kann, als dies bei den bekannten Farbträgerfallen für Farbfernsehempfänger mit analoger Signalverarbeitung bisher möglich war. Dies bedeutet, insbesondere für SECAM-Farbfernsehempfänger, daß auch bei der digitalen Realisierung die Farbträgerfalle eine angepaßte variable Sperrfrequenz aufweisen kann. Andererseits bedeutet dies nach einer anderen Ausgestaltung der Erfindung, daß die Sperrfrequenz der Farbträgerfalle auch bei einer veränderlichen Frequenz des Taktsignals konstant gehalten werden kann, mit dem die Signalverarbeitungsstufen des digitalen Farbfernsehempfängers getaktet sind.

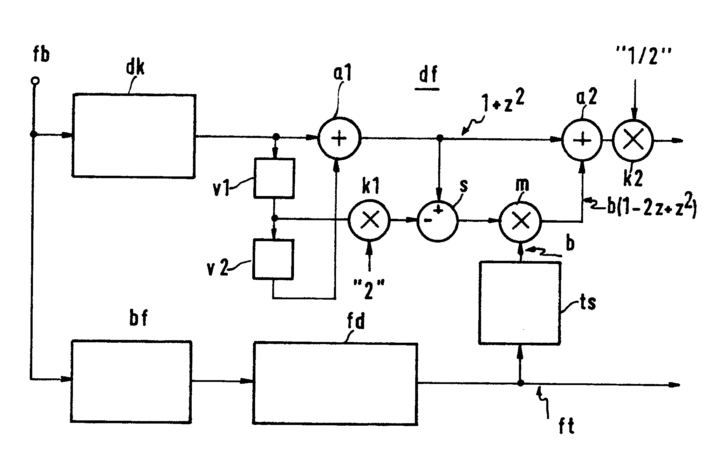

Die Erfindung wird nun anhand der Figur der Zeichnung näher erläutert, die schematisch das Blockschaltbild eines Ausführungsbeispiels der erwähnten ersten Ausgestaltung der Erfindung zeigt, und zwar mit der der momentanen Farbträgerfrequenz nachgeführten Sperrfrequenz des als Farbträgerfalle dienenden Digitalfilters.

In der Figur sind im oberen Signalzweig der Luminanzkanal und im unteren Signalzweig der Chrominanzkanal eines SECAM-Farbfernsehempfängers mit digitaler Signalverarbeitung schematisch angedeutet, denen an ihrem Eingang jeweils das digitale FBAS-Signal fb zugeführt ist. Dieses durchläuft im Luminanzkanal zunächst die übliche Laufzeitkompensationsstufe dk, mit der die größere Laufzeit des Chrominanzsignals im Chrominanzkanal ausgeglichen wird, so daß am jeweilen Ausgang der beiden Kanäle zu jedem Zeitpunkt die zueinander gehörenden Signale auftreten. Der Laufzeitkompensationsstufe dk ist im Luminanzkanal signalflußmäßig dann das die Farbträgerfalle bildende Digitalfilter df nachgeschaltet.

Das Digitalfilter df ist wie folgt aufgebaut. Sein Eingang führt zum ersten Eingang des ersten Addierers a1 und dem ersten Verzögerer v1, dem der zweite Verzögerer v2 nachgeschaltet ist. Die Verzögerungszeit dieser beiden Verzögerer v1, v2 ist gleich der Periodendauer des Taktsignals des Digitalfilters df, also z.B. gleich der Periodendauer des Taktsignals f, mit dem die Signalverarbeitungsstufen des digitalen Farbfernsehempfängers getaktet sind. Der Ausgang des zweiten Verzögerers v2 liegt am zweiten Eingang des ersten Addierers a1, während der Ausgang des ersten Verzögerers v1 über den ersten Konstanten-Multiplizierer k1 am Subtrahend-Eingang des Subtrahierers s liegt, wobei dem Konstanten-Multiplizierer k1 ein der dezimalen zwei entsprechender Signalwert "2" zugeführt ist.

Der Ausgang des ersten Addierers a1 liegt sowohl am Minuend-Eingang des Subtrahierers s als auch am ersten Eingang des zweiten Addierers a2. Der Ausgang des Subtrahierers s ist mit dem ersten Eingang des Multiplizierers m verbunden, dessen Ausgang mit dem zweiten Eingang des zweiten Addierers a2 verbunden ist. Dessen Ausgang liegt am Eingang des Konstanten-Multiplizierers k2, dem ein dem Dezimalwert 1/2 entsprechendes Signal "1/2" zugeführt ist und dessen Ausgang der Ausgang des Digitalfilters df ist.

Im Chrominanzkanal sind rein schematisch das Bellfilter mit Luminanzsperre bf und der Frequenzdemodulator fd gezeigt, an dessen Ausgang das der Farbträgerfrequenz proportionale Signal ft auftritt, das Ausgangssignal des Chrominanzkanals ist. Dieses ist der Teilschaltung ts zugeführt, deren Ausgang mit dem zweiten Eingang des Multiplizierers m verbunden ist.

Die Übertragungfunktion eines geeigneten Digitalfilters hat die allgemeine Form
H(z) = c(1 - 2coswz + z²),
wobei c ein Amplitudenfaktor, w = 2 $\pi$ fs/f, z die komplexe Variable, fs die Sperrfrequenz des Digitalfilters und f die bereits erwähnte Taktfrequenz des die Signalverarbeitungsstufen taktenden Taktsignals ist. Das Digitalfilter df hat nach der Erfindung jedoch eine konstante Gleichstromverstärkung im Variabilitätsbereich des variablen Verhältnisses w' = fs/f, so daß die spezielle Übertragungsfunktion gilt:
H'(z) = (1 + z² + b(1 - 2z + z²))/2,
wobei b = (cosw)/(1 - cosw) ist. Diesen Wert b liefert die Teilschaltung ts, die hierzu beispielsweise als Festwertspeicher (ROM) oder als speziell ausgelegte Rechenschaltung ausgebildet sein kann.

Die Farbträgerfalle nach der Erfindung kann jedoch nicht nur mit konstanter Taktfrequenz f und variabler Sperrfrequenz fs realisiert werden, sondern es ist auch möglich, sie mit konstanter Sperrfrequenz fs und variabler Taktfrequenz f zu betreiben, welcher Fall für Farbfernsehempfänger von Interesse ist, die mit sogenannter Zeilenverkopplung ausgestattet sind. Dies meint, daß die Taktfrequenz fs für die digitale Signalverarbeitung solcher Farbfernsehempfänger nicht ein vorzugsweise ganzzahliges Vielfaches der Farbträgerfrequenz ist, wie dies für die bisher üblichen digitalen Farbfernsehempfänger zutrifft, sondern daß die Taktfrequenz in festem Verhältnis zu der im allgemeinen nicht sehr konstanten Horizontalablenkfrequenz steht. Aus dieser sogenannten Zeilenverkopplung ergeben sich bedeutende Vorteile, insbesondere im Hinblick auf den Betrieb des Farbfernsehempfängers zusammen mit Videorecordern.

Die erfindungsgemäße Farbträgerfalle läßt sich ohne weiteres mittels integrierter Schaltungen realisieren, insbesondere ist sie zur Realisierung mittels Isolierschichtfeldetfekttransistoren, also in der sogenannten MOS-Technik, bestens geeignet, da nur rein digital arbeitende Schaltungsstufen vorhanden sind. Der Bedarf an Halbleiterkristall-Fläche ist dabei aufgrund der speziellen Wahl der Schaltung des Digitalfilters df recht niedrig, da lediglich ein Multiplizierer für die Variable b erforderlich ist, während die beiden Konstanten-Multiplizierer durch entsprechende Stellenverschiebung in einfachster Weise realisierbar sind, wenn die Schaltung im Binärcode arbeitet.

## Ansprüche

1. Farbträgerfalle für den Luminanzkanal von Farbfernsehempfängern, mit variablem Verhältnis von Sperrfrequenz (fs) der Farbträgerfalle und Farbträgerfrequenz, wobei der Variabilitätsbereich mit konstanter Gleichstromverstärkung ausgebildet ist,
dadurch gekennzeichnet, daß
   - die Farbträgerfalle eine digitale Schaltung für den Luminanzkanal von digitalisierten Farbfernsehempfängern ist, deren getakteten Signalverarbeitungsstufen ein Taktsignal entsprechender Taktfrequenz (f) zugeführt ist,
   - des Verhältnis (w') von der Sperrfrequenz (fs) zur Taktfrequenz (f) variabel ist und
   - die Farbträgerfalle einen Aufbau mit der Übertragungsfunktion H'(z) = 1 + z² + b(1-2z + z²)/2 aufweist, wobei
   w = 2 pi fs/f, z die komplexe Variable und
   b = (cosw)/(1-cosw) ist.

2. Farbträgerfalle nach Anspruch 1 mit konstanter Sperrfrequenz (fs) und variabler Taktfrequenz (f).

3. Farbträgerfalle nach Anspruch 1 mit konstanter Taktfrequenz (f), dadurch gekennzeichnet, daß die Sperrfrequenz (fs) entweder auf die SECAM-Norm-bedingte jeweilige Farbträgerfrequenz aufeinanderfolgender Zeilen umgeschaltet wird oder der momentanen Farbträgerfrequenz nachgeführt ist.

## Claims

1. Color-carrier trap for the luminance channel of color-television receivers, with a variable ratio of the cutoff frequency (fs) of the color-carrier trap to the color-carrier frequency and with a constant direct-current gain in the range of variability,
characterized in
   - that the color-carrier trap is a digital circuit for the luminance channel of digitized color-television receivers whose clocked signal-processing stages are supplied with a clock signal of suitable frequency (f),
- that the ratio (w') of the cutoff frequency (fs) to the clock frequency (f) is variable, and
- that the color-carrier trap has a structure with the transfer function $H'(z) = (1 + z^2 + b(1-2z + z^2))/2$,
  where $w = 2\,\pi\, fs/f$, z is the complex variable, and
  $b = (\cos w)/C1-\cos w)$.

2. A color-carrier trap as claimed in claim 1 and having a fixed cutoff frequency (fs) and a variable clock frequency (f).

3. A color-carrier trap as claimed in claim 1 and having a fixed clock frequency (f), characterized in that the cutoff frequency (fs) is either switched to the respective SECAM color-carrier frequency of successive lines or made to follow the instantaneous color-carrier frequency.

## Revendications

1. Piège pour la porteuse couleur pour le canal de luminance de récepteurs de télévision en couleurs, pour lequel le rapport de la fréquence de coupure (fs) du piège pour la porteuse couleur à la fréquence de cette porteuse est variable, avec une amplification constante en courant continu dans la plage de variabilité, caractérisé par le fait que
   - le piège pour la porteuse couleur est un circuit numérique pour le canal de luminance de récepteurs numérisés de télévision en couleurs, aux étages cadencés de traitement des signaux desquels est envoyé un signal de cadence possédant une fréquence de cadence correspondante (f),
   - le rapport (w') de la fréquence de coupure (fs) à la fréquence de cadence (f) est variable, et
   - le piège pour la porteuse couleur possède une structure présentant la fonction de transfert $H'(z) = (1 + z^2 + b(1-2z + z^2))/2$,
     avec $w = 2\,\pi\, fs/f$, z étant la variable complexe et
     $b = (\cos w)/(1-\cos w)$.

2. Piège pour la porteuse couleur suivant la revendication 1 possédant une fréquence de coupure constante (fs) et une fréquence de cadence variable (f).

3. Piège pour la porteuse couleur selon la revendication 1 possédant une fréquence de cadence constante (f), caractérisé en ce que la fréquence de coupure (fs) soit est commutée sur la fréquence respective de la porteuse couleur, conditionnée par la norme SECAM, de lignes successives, soit est asservie à la fréquence instantanée de la porteuse couleur.